# EUROPEAN PATENT SPECIFICATION

(11) **EP 3 819 063 B1**
(45) Date of publication and mention of the grant of the patent: **07.06.2023**
(21) Application number: 20206036.4
(22) Date of filing: 05.11.2020
(51) Int. Cl.: B23K 20/02, F28D 9/00, F28F 7/02, B23K 20/227

(54) **MANUFACTURING METHOD FOR MONOLITHIC MULTI-PIPE HYDRAULIC DEVICES SHAPED AS SOLIDS OF REVOLUTION , IN PARTICULAR HEAT EXCHANGERS**
HERSTELLUNGSMETHODE FÜR MONOLITISCHE HYDRAULISCHE VORRICHTUNGEN GEFORMT ALS ROTATIONSKÖRPER, INSBESONDERE FÜR WÄRMETAUSCHER
MÉTHOD DE FABRICATION POUR DISPOSITIFS MONOLITHIQUES HYDRAULIQUES AYANT LA FORME D'UN SOLIDE DE REVOLUTION, NOTAMMENT POUR ÉCHANGEURS DE CHALEUR

(30) Priority: 05.11.2019 IT 201900020380
(43) Date of publication of application: 12.05.2021
(73) Proprietor: Microchannel Devices S.r.l., 10121 Torino (IT)
(72) Inventor: VAIARELLI, Alessandro, 10121 TORINO (IT); PRIARONE, Paolo Claudio, 10121 TORINO (IT)
(74) Representative: Plebani, Rinaldo

(56) References cited:
- WO-A1-2013/182584
- US-A1- 2008 116 246
- US-A1- 2015 176 913
- US-A1- 2016 107 274

## Description

This invention relates to a manufacturing method for monolithic multi-pipe hydraulic devices shaped as solids of revolution, in particular heat exchangers with cylindrical symmetry, intended to operate under conditions of elevated temperatures and pressures.

### Prior Art

As is well known, in the processes of heat exchange between fluids, and more generally in the transport of fluids, where the fluids in question are at high pressures and temperatures, people increasingly wish to use, as an alternative to conventional tubular heat exchangers, in particular multi-pipe heat exchangers, hydraulic devices of the monolithic type, in which the hydraulic circuits are formed inside a metallic block, generally made of highstrength steel or super alloys, for example Ni-Cr.

Since it would be difficult and costly to form these internal hydraulic circuits by machining a metallic monobloc, the technology called "diffusion bonding" is generally used to make several metallic sheets or plates monolithic. The sheets or plates are stacked one on top of the other and carry a part of the hydraulic circuit to be obtained on one or both of their faces.

"Diffusion bonding" technology or "diffusion welding" is a solid-state welding technique that is well known in engineering and used in metalworking; it is capable of joining two metals whether they are the same or not. It works on the principle of solid-state diffusion, in which atoms on two solid, metallic surfaces inter-diffuse over time.

A type of heat exchanger obtained with this technology is the one called PCHE (Printed Circuit Heat Exchanger), in which the hydraulic circuit is made by superimposing ducted metallic plates, i.e. etched by means of printed circuit technology on one or both of their opposite flat faces, and which are then made monolithic by diffusion welding by applying one or more HUP (Hot Uniaxial Pressure) or HIP (Hot Isostatic pressure) cycles.

According to US20160107274, two plates that have channels/grooves mirroring each other are coupled, so as to form a first fluid circuit. This element formed by two plates is sealed and degassed using a capsule; following this, a low-pressure HIP cycle is applied. The channels are then opened towards the outside by machining and a second, high-pressure HIP cycle is then applied. The resulting plates are then ducted on the two outer sides, thus forming a second fluid circuit. Multiple elements obtained using this method are stacked and a first HIP cycle is performed at low pressure with the channels of the second circuit closed. These channels are then opened and a final HIP cycle is performed at high pressure.

The process described is laborious and time-consuming to implement. In addition, a very high level of accuracy is required to match the fluid circuits and several HIP cycles must be applied, which increases costs and may make this solution unviable.

In any case, the method described, as well as all other methods currently used for implementing monolithic heat exchangers, have the limitation that the monolithic product that is obtained has a parallelepiped symmetry, i.e., it consists of a monolithic block formed from the union, by diffusion bonding, of multiple plates having a basically rectangular shape in plan, which have been stacked one on top of the other.

This compulsory shape entails, on the one hand, with the same fluid flow capacity, a greater volume compared to conventional shell and tube heat exchangers, which have a cylindrical shape, and, on the other hand, make it more difficult to withstand the internal operating pressures, which are usually equal to or greater than 900 bars (90 MPa) . In order to withstand these pressures, provision must be made around the heat exchange core, consisting of the portion of the monolithic block cross-section equipped with the pipes constituting the hydraulic conveying and/or heat exchange circuit(s), by means of a rather large (thick) "cortex" or outer covering layer of solid material (i.e., free of pipes or cavities) made according to one of the following methods:
- Use of neutral plates (i.e., without etching) positioned above and below the heat exchange core (consisting of ducted plates) and made monolithic with each other and with the ducted plates by diffusion welding;
- Creation of a neutral "technical" edge in the ducted plates themselves, i.e., leaving a continuous annular portion of each plate free of etching/channels along a whole peripheral edge of the ducted plates.

In both cases, there is the drawback of obtaining a device that is heavy and less thermally efficient.

### Summary of the Invention

The purpose of this invention is to provide a manufacturing method for monolithic multi-pipe hydraulic devices, in particular heat exchangers, free of the drawbacks of the prior art, by which a hydraulic device with good mechanical strength, low weight, and high thermal efficiency is obtained, all in a relatively simple, quick, and costeffective manner.

According to the invention, a manufacturing method for monolithic multi-pipe hydraulic devices, in particular heat exchangers with the characteristics set forth in the appended claim 1 and in dependent claims 2-9, is, therefore, provided According to the invention, a multi-pipe monolithic hydraulic device according to independent claim 10 is also provided.

### Brief Description of the Drawings

The invention will now be described with reference to the appended drawings, which illustrate a non-limiting embodiment thereof, wherein:
- Figure 1 schematically illustrates a three-quarter perspective view from above of a monolithic hydraulic device, in this case a heat exchanger, produced according to the invention during a final manufacturing step of the same, only illustrated schematically;
- Figure 2 schematically illustrates a cross-section view according to a plane II-II of the hydraulic device in Figure 1;
- Figure 3 schematically illustrates a plan view from above of a first type of ducted plate forming part of the monolithic multi-pipe hydraulic device produced according to the invention;
- Figure 4 schematically illustrates a plan view from above of a second type of ducted plate forming part of the monolithic multi-pipe hydraulic device produced according to the invention;
- Figure 5 schematically illustrates a step in the manufacturing method for the monolithic multi-pipe hydraulic device according to the invention; and
- Figure 6 schematically illustrates a cross-section view according to a plane VI-VI of the hydraulic device in Figure 1.

### Detailed Description

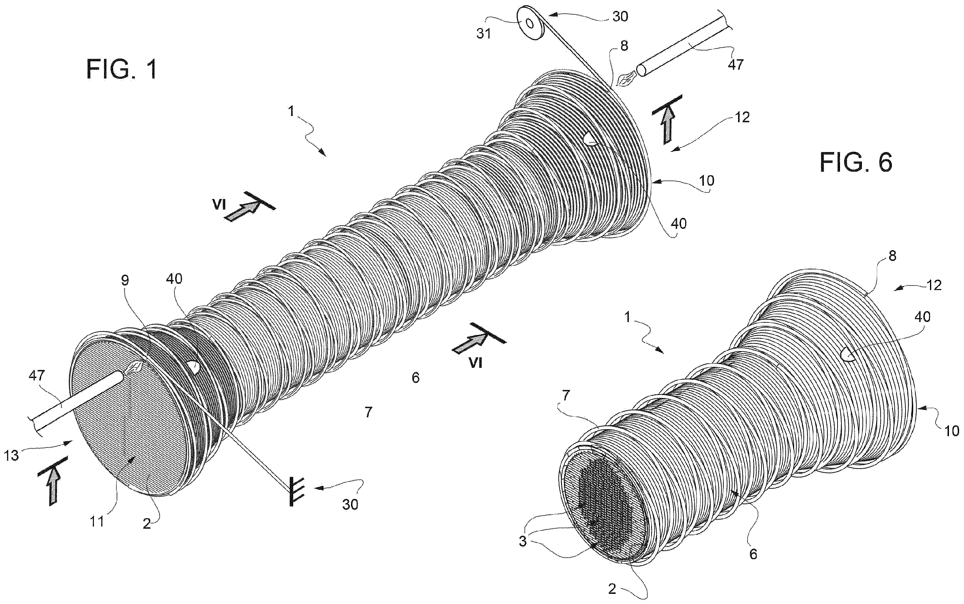

With reference to Figures 1 and 6, the reference number 1 here identifies, as a whole, a monolithic multi-pipe hydraulic device, in the illustrated example one consisting of a heat exchanger.

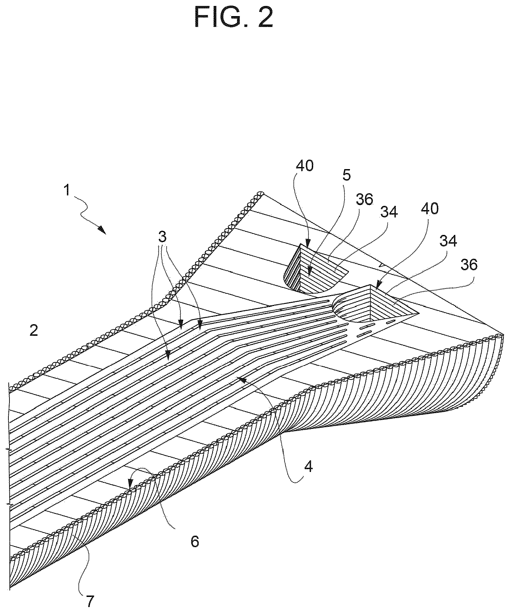

According to a first feature of the invention, the hydraulic device or heat exchanger 1 consists of a monolithic metallic block 2 basically shaped like a solid of revolution, in the illustrated example having substantially cylindrical symmetry, and internally provided (Figure 6) with multiple pipes 3 configured (Figure 2) to define at least one hydraulic circuit 4 or, preferably, a pair of hydraulic circuits 4 and 5 (Figure 2), the circuit 5 being illustrated only in one of its end parts for simplicity, the circuits being arranged adjacent to each other inside the hydraulic device 1 so as to promote heat exchange.

According to another aspect of the invention, moreover, a lateral outer surface 6 of the monolithic metallic block 2, having the shape of a surface of revolution, is tightly wound by a metallic cable 7, preferably made of a steel, for example a stainless steel. The metallic cable 7 has been placed under mechanical tension at the time of winding on the lateral surface 6, whereby the metallic cable 7 is tensioned, i.e. statically subjected to a previously induced, and then locked, tensile stress. This is because, for example, the metallic cable 7 has its opposite ends 8 and 9 firmly fixed, for example welded, to the lateral surface 6, or to respective front surfaces 10, 11 of opposite terminal ends 12, 13 of the monolithic metallic block 2.

The monolithic hydraulic device 1 described is manufactured by means of a manufacturing method for monolithic multi-pipe hydraulic devices, in particular heat exchangers. This method is an integral part of the invention.

The manufacturing method of the invention comprises the following steps.

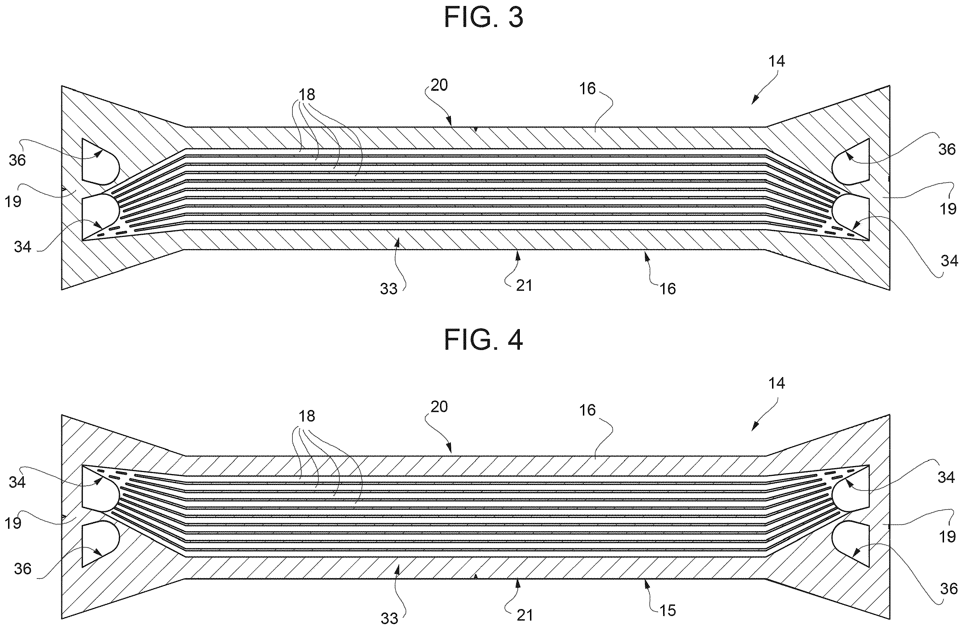

Firstly, the step of making/obtaining multiple ducted metallic plates, preferably of a first type 14 and of a second type 15 (Figures 3 and 4) each delimited by opposite flat faces 16 (of which only one is clearly visible in Figures 3 and 4) and provided, on at least one of these flat faces 16, with one or more grooves or channels 18 extending between first opposite ends 19 of the plates 14, 15 and parallel to second opposite ends 20, 21 of the plates 14, 15 arranged transversely to the first ends 19.

In the illustrated non-limiting embodiment, the plates 14, 15 have a basically rectangular shape (except at the ends 19, where they are wider and basically trapezoidalshaped) and the ends 20, 21 define opposite lateral sides of the plates 14, 15.

The grooves or channels 18 are made so as to leave the second ends 20, 21 of the metallic plates 14, 15 solid and free of the grooves or channels 18.

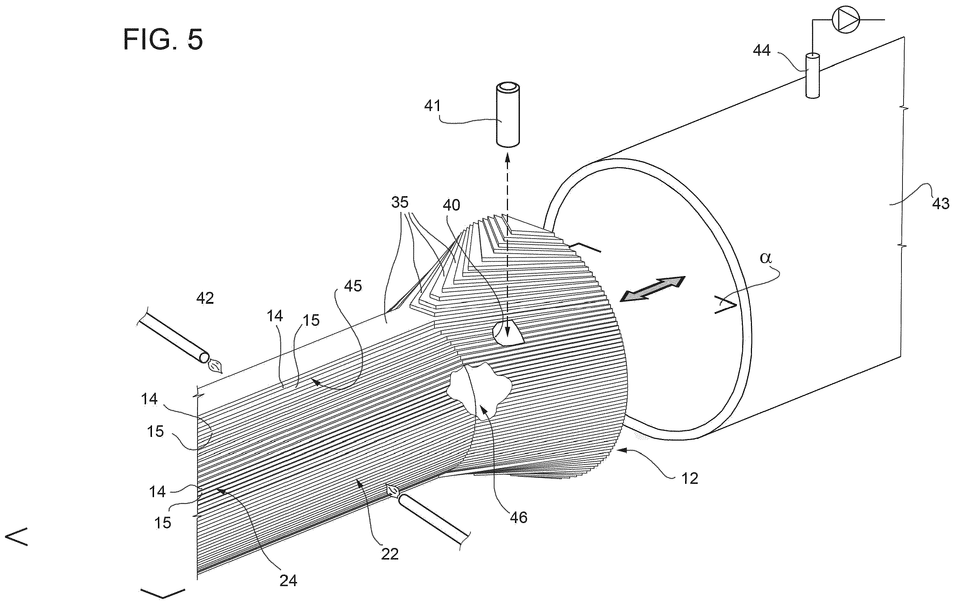

Next, the plates 14, 15 are stacked on top of each other with the opposite flat faces 16 resting directly against each other to form a stack 22 (Figure 5).

Finally, the stack 22 is subjected to at least one thermomechanical integration cycle by diffusion welding or "diffusion bonding", so as to obtain a single monolithic block from the overlapping metallic plates 14, 15, in this case the monolithic metallic block 2 within which the grooves or channels 18 form multiple pipes 3, forming the above-mentioned at least one hydraulic circuit 4, and preferably a pair of separate and adjacent hydraulic circuits 4, 5.

According to the invention, the multiple ducted metallic plates 14, 15 have the same shape but are made two-by-two with a width, measured between the second ends 20, 21 thereof, progressively decreasing, starting from at least one first plate 14 or 15, or, in the example illustrated, from a first pair 24 (Figure 5) of plates 14, 15 of identical width, arranged on a median plane α of the stack 22 (plane α to which the cross-section plane II-II in Figure 1 is perpendicular), the subsequent plates 14, 15 being arranged alternatively and symmetrically above and below the first plate 14, 15 or the first pair 24 of plates 14, 15.

The width of the metallic plates 14, 15 is, in addition, made so that the monolithic block 2 obtained at the end of the diffusion welding step basically has the shape of a solid of revolution, in the non-limiting example illustrated a basically cylindrical shape, at least between the opposite ends 12, 13.

Furthermore, according to another aspect of the invention, at the end of the step for joining the metallic plates 14, 15 by diffusion welding, the monolithic metallic block 2 with the solid of revolution shape obtained by the mutual "fusion" of the metallic plates 14, 15 is wrapped with a metallic cable 7.

This metallic cable 7 is tightly wound in a spiral and/or with a winding laid on the lateral outer surface 6 of the monolithic metallic block 2 and is then firmly fixed to the latter.

In addition, the step for winding the metallic cable 7 on the lateral outer surface 6 of the monolithic metallic block 2 is carried out by keeping the metallic cable 7 under mechanical tension.

This step is schematised in Figure 1, wherein the metallic cable 7, preferably made of steel, is wound under tension by means of a winding and tensioning device 30, for example held stationary at one end and unwound by a spindle 31 alternately movable along the monolithic block 2, for example according to what is indicated by the arrows in Figure 1.

According to one aspect of the invention, in this winding and tensioning step a metallic cable is used that has a cross-section with a circular, oval, or elliptic shape or, in any case, a shape without edges.

The grooves or channels 18 of the ducted metallic plates 14, 15 are formed (Figures 3 and 4) in an intermediate portion 33 of the ducted plates 14, 15 between the first ends 19 thereof.

In combination with this feature, in the preferred embodiment illustrated the first ends 19 of the ducted plates 14, 15 are internally provided with first through apertures 34 made perpendicular to the opposite flat faces 16 of the ducted plates 14, 15 and into which first through apertures 34 of each plate 14, 15 all the grooves or channels 18 present on the same plate 14, 15 debouch.

According to a preferred embodiment of the invention, the ducted metallic plates 14, 15 are also made so as to have their first ends 19 of a width, measured transversely to the second ends 20, 21, greater than that of the intermediate portion 33.

The first ends 19 are preferably shaped so as to define, after joining the plates 14, 15 by diffusion welding, the respective opposite terminal ends 12, 13 of the monolithic metallic block 2, which, in the non-limiting example illustrated, are basically shaped like a truncated cone.

In order to obtain the solid of revolution shape of the metallic monolithic block obtained from joining, by diffusion welding, the plates 14, 15, the pairs of plates 14, 15 that are stacked are, as one moves away from the first pair 24 of plates 14 and/or 15 of identical width, of a progressively smaller width and, therefore, are able to receive, for example by chemical or mechanical etching, according to the known PCHE technology, a progressively smaller number of grooves or channels 18 on one (or both) of their faces 16. Thus, the number of pipes 8 obtained at the end inside the metallic monolithic block 2 progressively decreases in the stacking direction, both above and below the first pair 24 of plates 14, 15, as is well illustrated in Figure 6.

In order to complete the solid of revolution shape of the final monolithic metallic block 2, moreover, non-ducted solid plates 35 (Figure 5), i.e. those without any grooves 18, may be stacked in the stack 22, for example after plates 14, 15 of such a reduced width that they can only accommodate a single groove or channel 18, especially to complete the truncated-cone shape of the ends 12, 13.

According to another aspect of the invention, in its preferred embodiment, the first ends 19 of the ducted plates 14, 15 are also internally provided with second through apertures 36 drilled perpendicularly to the opposite flat faces 16 of the ducted plates 14, 15 and arranged alongside the first through apertures 34.

However, no grooves or channels 18 debouch into the second through apertures 36.

In practice, in the preferred embodiment, as is clearly visible in Figures 3 and 4, the ducted plates 14 and 15, of the first and second types respectively, have mirror-like symmetry being made so as to have the first through apertures 34 arranged in an opposite manner and are coupled in the stack 22 in pairs formed from a plate 14 of the first type and a plate 15 of the second type.

In addition, the plates 14 of the first type have the first through apertures 34 arranged aligned at the second through apertures 36 of the plates 15 of the second type, and vice versa, so that the grooves or channels 18 of the plates 14, 15 internally form in the monolithic metallic block 2 pipes defining the above-mentioned first and second hydraulic circuit 4, 5, which are separate and adjacent to each other but ducted in an opposite manner.

In the stack 22, the first and second through apertures 34, 36 also remain alternately aligned with each other, one aperture 34 above and/or below another aperture 36, and vice versa, and define, when plates 14, 15 are joined together by diffusion welding to form the monolithic metallic block 2, respective access conduits 40 to the hydraulic circuits 4 and 5.

Therefore, as soon as the stack 22 is formed, the channels or grooves 18 are in hydraulic communication with the outside of the stack 22 through the sequence of through apertures 34, 36 alternately aligned with each other and, when the monolithic block 2 is formed or, in any case, even only partially formed, the respective pipes 3 are hydraulically connected with the outside through the conduits 40.

The through apertures 34 and/or 36 are preferably also used to insert alignment pins 41 in them (Figure 5) to ensure the alignment of the plates 14, 15 during the stacking step for forming the stack 22; in practice, the pins 41 are inserted in one or more of those tubular recesses delimited by the through apertures 34, 36 arranged in sequence that will form the conduits 40 once the monolithic block 2 is formed.

The ducted plates 14, 15, once stacked aligned with each other with all the apertures 34, 36 placed aligned in sequence, are held together by means of the alignment pins 41, which, for that matter, can also be inserted, instead of through the sequence of through apertures 34, 35, through appropriate through holes (not illustrated) which are drilled for this purpose through the plates 14, 15, preferably through the ends 19 (and which holes have therefore also to be arranged aligned with each other), or through perimetral welding points, for example made by means of appropriate welding torches or electrodes 42 (Figure 5).

Next, the stack 22 is inserted into a capsule 43 designed for diffusion bonding, of generally known type, which is sealed and in which a vacuum is made through, for example, a little tube 44, so as to make a molecular vacuum even at an interface 45 between the opposite flat faces 16 of each pair of mutually contacting ducted plates 14 and/or 15. The degree of vacuum should preferably be at least 10⁻⁴ millibars.

Later on, and inside the capsule 43, the stack 22 is subjected to a low-pressure HIP (Hot Isostatic Pressure) cycle, for example ranging between 100 and 300 bars, (10 and 30 MPa), operating at a temperature ranging between 900 and 1,300 °C depending on the metallic material with which the ducted plates 14, 15 are made (for example steel, Ni-Cr superalloy, etc.), so as to join the plates 14, 15 together by diffusion bonding to form an assembly 46 (Figure 5) already basically monolithic or at least partially monolithic and to form the pipes 3.

As soon as the low-pressure HIP cycle is completed, the capsule 43 is opened and the assembly 46 is extracted; to aid extraction, the inner walls of the capsule 43 may be coated with a boron nitride powder. During this low-pressure HIP step, in fact, the lateral wall of the stack 22 shaped as a solid of revolution is in contact with the lateral wall of the capsule 43 so that the channels or grooves 18 are not in hydraulic communication with is the environment on the outside of the plates 14, 15.

Subsequently, after the opening of the capsule 43, the assembly 46 is subjected to a high-pressure HIP cycle (a step known in the art and therefore not illustrated) by means of a gas heated to a temperature that depends on the metallic material with which the ducted plates are made and ranging between 900 and 1,300 °C. This gas is fed, pressurised, at a pressure in the order of a thousand bars (1 bar corresponding to 0,1 MPa) so as to fill all the pipes 3 previously formed, the ducted plates 14, 15 having been made so that the pipes 3 be open towards the outside during this step, until the monolithic metallic block 2 in the shape of a solid of revolution is obtained.

Finally, at the end of the high-pressure HIP cycle, respective hydraulic connection accessories for connecting to the pipes 3 (known and not illustrated for simplicity) are welded to the monolithic metallic block 2. These accessories, for example, consist of manifolds welded at the conduits 40, and then the monolithic metallic block 2 is subjected to the final winding phase with a tensioned metallic cable 7, preferably made of a steel, which is wound against the lateral surface 16 in one or more layers, taking care to wind it in a spiral with the coils in contact with each other or crossed.

At the end of the step for winding the cable 7, this is cut to form its opposite ends 8, 9, which are fixed/welded, so as to keep the cable 8 under tension, to the lateral surface 16 or to the front surfaces 10, 11, using, for example, welding torches 47.

In this way, the surface area of the ducted plates is better utilised and the number of channels 18 per layer, consisting of a pair of stacked plates 14, 15 stacked in contact, is increased. In addition, the mechanical strength of the hydraulic device 1 (heat exchanger) is substantially increased, particularly having regard internal pressures.

Finally, fewer neutral plates (i.e., non-ducted, solid plates, such as the plates 35) are to be used for forming the "cortex" of the device 1 ensuring, for equal volume:
- Less weight
- Greater thermal efficiency

All the purposes of the invention are, therefore, achieved.

## Claims

1. A manufacturing method of multi-pipe monolithic hydraulic devices (1), in particular heat exchangers, comprising the steps of:
i) - producing a plurality of ducted metallic plates (14, 15) delimited by opposite flat faces (16) and provided on at least one of said flat faces with one or more grooves or channels (18) which extend between first opposite ends (19) of the plates and parallel to second opposite ends (20, 21) of the plates arranged transversely to the first ends, leaving the second ends of the metallic plates solid and without grooves or channels;
ii)- stacking the ducted metallic plates (14, 15) with the opposite flat faces rested directly one against the other to form a stack (22); and
iii)- subjecting the stack (22) of ducted metallic plates to at least one thermomechanical integration cycle by diffusion bonding so as to obtain, from the metallic plates, a single monolithic block (2) within which the grooves or channels form a plurality of pipes (3) realizing at least one hydraulic circuit (4; 5); **characterised in that**
iv)- said plurality of ducted metallic plates (14, 15) have the same shape but are made two-by-two with a width, measured between said second ends (20, 21) of the same, progressively decreasing, starting from at least a first plate, or a first couple (24) of plates having an identical width, arranged at a median plane (α) of the stack, the plurality of ducted metallic plates being arranged alternatively and symmetrically above and below the first plate or the first couple of plates; the width of the metallic plates (14, 15) being made so that the monolithic block (2) that is obtained at the end of step iii) of diffusion bonding has a shape that is substantially a solid of revolution;
v)- at the end of step iii) of integrating, by diffusion bonding, the metallic plates (14, 15), winding a metallic cable (7) upon the monolithic metallic block (2) with a shape of a solid of revolution obtained from the metallic plates, the metallic cable (7) being tightly wound in a spiral and/or with a cross-winding on a lateral outer surface (6) of the monolithic metallic block and then being firmly fixed to the latter.

2. The method according to claim 1, **characterised in that** the step of winding the metallic cable (7) on the lateral outer surface (6) of the monolithic metallic block (2) is achieved by keeping the metallic cable (7) under mechanical tension.

3. The method according to claim 1 or 2, **characterised in that** in step v) a metallic cable (7) is used, having a cross-section having a circular, oval, or elliptic shape or, however, a shape without edges.

4. The method according to one of the preceding claims, **characterised in that** said grooves or channels (18) of the ducted metallic plates are obtained in an intermediate portion (33) of the ducted plates comprised between said first ends (19) of the same; said first ends of the ducted plates being internally provided with first through apertures (34) bored perpendicularly to said opposite flat faces (16) of the ducted plates, said grooves or channels (18) debouching in said first through apertures.

5. The method according to claim 4, **characterised in that** said ducted metallic plates (14, 15) are made so as to have their said first ends (19) of a width, measured transversely to the second ends, wider than that of said intermediate portion (33) of the ducted plates; said first ends (19) preferably being formed so as to define, after the integration of the plates, respective opposite terminal ends (12, 13) of the monolithic metallic block (2) basically shaped like a truncated cone.

6. The method according to claim 4 or 5, **characterised in that** said first ends (19) of the ducted plates are internally provided with second through apertures (36) made perpendicularly to said opposite flat faces (16) of the ducted plates and arranged beside the first through apertures (34), none of said grooves or channels debouching in the second through apertures (36).

7. The method according to claim 6, **characterised in that** the ducted metallic plates are made of a first (14) and of a second (15) type having the first through apertures (34) arranged in an opposed manner, and are coupled in the stack (22) in pairs formed by a plate of the first type (14) and by a plate of the second type (15); the plates of the first type (14) having the first through apertures (34) arranged aligned with the second through apertures (36) of the plates of a second type (15), so that the grooves or channels (18) of the plates form, inside the monolithic metallic block, pipes (3) defining a first and a second hydraulic circuit (4, 5) separate from one another, of which circuits the first (34) and second (36) through apertures, aligned alternatively with one another, define respective access conduits (40); said through apertures (14, 15) being preferably used also to insert therein alignment pins (41), to ensure the alignment of the plates during the stacking step.

8. The method according to one of the preceding claims, **characterised in that** the ducted plates (14, 15), once stacked, are kept assembled together by means of perimetral welding points and/or by means of alignment pins (41) inserted in holes or in through apertures (34, 36) obtained through the ducted plates, preferably at the first ends (19) of the same, and the stack (22) is inserted in a capsule (43) which is sealed and in which the vacuum is made, so as to create vacuum also at an interface (45) between the opposite flat faces (16) of each pair of ducted plates in mutual contact; subsequently, the stack (22) is subjected, inside the capsule, to a low-pressure HIP cycle, for example comprised between 100 and 300 bar, so as to integrate the plates with one another in order to form an assembly (46) substantially monolithic and form said pipes (3), the capsule is opened and the assembly (46) is subjected to a high-pressure HIP cycle by means of a gas heated to a temperature depending on the metallic material with which the ducted plates are made and comprised between 900 and 1300°C, supplied under pressure at a pressure of the order of a thousand bar so as to fill all of said pipes (3), the ducted plates (14, 15) having been made so as to render, in this step, the pipes (3) open towards the outside, until said monolithic metallic block (2) shaped as a solid of revolution is obtained.

9. The method according to claim 8, **characterised in that** at the end of the high-pressure HIP cycle respective hydraulic connection accessories to the pipes (3) are welded to the monolithic metallic block (2) and then the monolithic metallic block is subjected to the winding step with a tensioned metallic cable (7), preferably made of steel.

10. A multi-pipe monolithic hydraulic device (1), in particular a heat exchanger, made according to the method of claims 1 to 9, **characterised in that** it consists of:
- a monolithic metallic block (2) having the shape of a solid of revolution and internally provided with a plurality of pipes (3) configured to define at least one hydraulic circuit (4; 5); and
- a steel cable (7) arranged wound in a tight manner onto ae lateral outer surface (6) of the monolithic metallic block (2), also having the shape of a surface of revolution; the steel cable (7) having been placed onto said lateral outer surface (6) under mechanical tension at the time of winding on the lateral surface (6), whereby the metallic cable (7) is in a state of tension, i.e. is statically subjected to a previously induced, and then locked, tensile stress.

## Patentansprüche

1. Verfahren zur Fertigung von monolithischen Mehrrohr-Hydraulikvorrichtungen (1), insbesondere von Wärmetauschern, mit den folgenden Schritten:
i)- Herstellen einer Vielzahl von kanalisierten Metallplatten (14, 15), die durch gegenüberliegende ebene Flächen (16) begrenzt sind und auf mindestens einer der ebenen Flächen mit einer oder mehreren Rillen oder Kanälen (18) versehen sind, die sich zwischen ersten gegenüberliegenden Enden (19) der Platten und parallel zu zweiten gegenüberliegenden Enden (20, 21) der Platten erstrecken, die quer zu den ersten Enden angeordnet sind, wobei die zweiten Enden der Metallplatten massiv und ohne Nuten oder Kanäle bleiben;
ii)- Stapeln der kanalisierten Metallplatten (14, 15), wobei die gegenüberliegenden flachen Seiten direkt aneinander liegen, um einen Stapel (22) zu bilden; und
iii)- Unterzeihen des Stapels (22) aus kanalisierten Metallplatten mindestens einem thermomechanischen Integrationszyklus durch Diffusionsschweißen, um aus den Metallplatten einen einzigen monolithischen Block (2) zu schaffen, in dem die Rillen oder Kanäle eine Vielzahl von Leitungen (3) bilden, die mindestens einen hydraulischen Kreislauf (4; 5) realisieren; **dadurch gekennzeichnet, dass**
iv)- die Vielzahl von kanalisierten Metallplatten (14, 15) die gleiche Form haben, aber paarweise mit einer Breite, gemessen zwischen den zweiten Enden (20, 21) derselben, hergestellt sind, die progressiv abnimmt, ausgehend von mindestens einer ersten Platte oder einem ersten Plattenpaar (24) mit identischer Breite, die in einer Mittelebene (α) des Stapels angeordnet sind, wobei die Vielzahl von kanalisierten Metallplatten abwechselnd und symmetrisch über und unter der ersten Platte oder dem ersten Plattenpaar angeordnet ist; wobei die Breite der Metallplatten (14, 15) so beschaffen ist, dass der monolithische Block (2), der am Ende von Schritt iii) des Diffusionsschweißens erlangt wird, eine Form hat, die im Wesentlichen ein Rotationskörper ist;
v)- am Ende von Schritt iii) der Integration der Metallplatten (14, 15) durch Diffusionsschweißen - Aufwickeln eines Metallseils (7) auf den monolithischen Metallblock (2) mit der Form eines aus den Metallplatten erhaltenen Rotationskörpers, wobei das Metallseil (7) spiralförmig und/oder mit einer Kreuzwicklung auf einer äu-ßere Seitenfläche (6) des monolithischen Metallblocks dicht aufgewickelt und dann fest an letzterem fixiert wird.

2. Verfahren nach Anspruch 1, **dadurch gekennzeichnet, dass** der Schritt des Aufwickelns des Metallseils (7) auf die äußere Seitenfläche (6) des monolithischen Metallblocks (2) dadurch erreicht wird, dass das Metallseil (7) unter mechanischer Spannung gehalten wird.

3. Verfahren nach Anspruch 1 oder 2, **dadurch gekennzeichnet, dass** in Schritt v) ein Metallseil (7) verwendet wird, das einen kreisförmigen, ovalen oder elliptischen Querschnitt oder aber eine kantenlose Form aufweist.

4. Verfahren nach einem der vorhergehenden Ansprüche, **dadurch gekennzeichnet, dass** die Rillen oder Kanäle (18) der kanalisierten Metallplatten in einem Zwischenabschnitt (33) der kanalisierten Platten geschaffen werden, der zwischen den ersten Enden (19) derselben liegt; wobei die ersten Enden der kanalisierten Platten innen mit ersten Durchgangsöffnungen (34) versehen sind, die senkrecht zu den gegenüberliegenden ebenen Flächen (16) der kanalisierten Platten gebohrt sind, wobei die Rillen oder Kanäle (18) in die ersten Durchgangsöffnungen münden.

5. Verfahren nach Anspruch 4, **dadurch gekennzeichnet, dass** die kanalisierten Metallplatten (14, 15) so hergestellt werden, dass ihre ersten Enden (19) eine Breite aufweisen, die, quer zu den zweiten Enden gemessen, breiter ist als die des Zwischenabschnitts (33) der kanalisierten Platten, wobei die ersten Enden (19) vorzugsweise so geformt sind, dass sie nach der Integration der Platten jeweils gegenüberliegende Abschlussenden (12, 13) des monolithischen Metallblocks (2) definieren, die im Wesentlichen die Form eines Kegelstumpfs haben.

6. Verfahren nach Anspruch 4 oder 5, **dadurch gekennzeichnet, dass** die ersten Enden (19) der kanalisierten Platten innen mit zweiten Durchgangsöffnungen (36) versehen sind, die senkrecht zu den gegenüberliegenden ebenen Flächen (16) der kanalisierten Platten hergestellt und neben den ersten Durchgangsöffnungen (34) angeordnet sind, wobei keine der Rillen oder Kanäle in die zweiten Durchgangsöffnungen (36) einmündet.

7. Verfahren nach Anspruch 6, **dadurch gekennzeichnet, dass** die kanalisierten Metallplatten eines ersten (14) und eines zweiten (15) Typs, bei denen die ersten Durchgangsöffnungen (34) entgegengesetzt angeordnet sind, in dem Stapel (22) paarweise gekoppelt sind, der durch eine Platte des ersten Typs (14) und eine Platte des zweiten Typs (15) gebildet wird; wobei in den Platten des ersten Typs (14) die ersten Durchgangsöffnungen (34) fluchtend mit den zweiten Durchgangsöffnungen (36) der Platten eines zweiten Typs (15) angeordnet sind, so dass die Rillen oder Kanäle (18) der Platten im Inneren des monolithischen Metallblocks Leitungen (3) bilden, die einen ersten und einen zweiten, voneinander getrennten hydraulischen Kreislauf (4, 5) definieren, wobei die ersten (34) und zweiten (36) Durchgangsöffnungen, die abwechselnd zueinander ausgerichtet sind, jeweilige Zugangskanäle (40) definieren; wobei die Durchgangsöffnungen (14, 15) vorzugsweise auch zum Einsetzen von Ausrichtstiften (41) verwendet werden, um die Ausrichtung der Platten während des Stapelvorgangs sicherzustellen.

8. Verfahren nach einem der vorhergehenden Ansprüche, **dadurch gekennzeichnet, dass** die kanalisierten Platten (14, 15), sobald sie gestapelt sind, mittels perimetraler Schweißpunkte und/oder mittels Ausrichtstiften (41), die in Löcher oder in durch die kanalisierten Platten geschaffene Durchgangsöffnungen (34, 36) eingesetzt sind, zusammengefügt gehalten werden, vorzugsweise an den ersten Enden (19) derselben, und der Stapel (22) in eine Kapsel (43) eingesetzt wird, die abgedichtet ist und in der das Vakuum erzeugt wird, so dass auch an einer Grenzfläche (45) zwischen den gegenüberliegenden ebenen Flächen (16) jedes Paares von kanalisierten Platten, die sich gegenseitig berühren, ein Vakuum erzeugt wird; anschließend wird der Stapel (22) im Inneren der Kapsel einem Niederdruck-HIP-Zyklus unterzogen, der beispielsweise zwischen 100 und 300 bar liegt, um die Platten miteinander zu verbinden, um eine im Wesentlichen monolithische Anordnung (46) zu bilden und die Leitungen (3) zu formen, die Kapsel wird geöffnet und die Anordnung (46) wird einem Hochdruck-HIP-Zyklus mit Hilfe eines Gases unterzogen, das auf eine Temperatur erhitzt wird, die von dem metallischen Material abhängt, aus dem die kanalisierten Platten hergestellt sind, und zwischen 900 und 1300°C liegt, unter Druck mit einem Druck in der Größenordnung von tausend Bar zugeführt wird, um die Gesamtheit der Leitungen (3) zu füllen, wobei die kanalisierten Platten (14, 15) so hergestellt sind, dass in diesem Schritt die Leitungen (3) nach außen hin offen sind, bis der monolithische Metallblock (2) in Form eines Rotationskörpers erlangt wird.

9. Verfahren nach Anspruch 8, **dadurch gekennzeichnet, dass** am Ende des Hochdruck-HIP-Zyklus das jeweilige hydraulische Verbindungszubehör zu den Leitungen (3) an den monolithischen Metallblock (2) geschweißt wird und der monolithische Metallblock dann dem Wickelvorgang mit einem gespannten Metallseil (7), vorzugsweise aus Stahl, unterzogen wird.

10. Monolithische Mehrrohr-Hydraulikvorrichtung (1), insbesondere Wärmetauscher, hergestellt nach dem Verfahren der Ansprüche 1 bis 9, **dadurch gekennzeichnet, dass** sie besteht aus:
- einem monolithischen Metallblock (2), der die Form eines Rotationskörpers hat und im Inneren mit einer Vielzahl von Leitungen (3) versehen ist, die so konfiguriert sind, dass sie mindestens einen hydraulischen Kreislauf (4; 5) definieren; und
- einem Stahlseil (7), das auf eine äußere Seitenfläche (6) des monolithischen Metallblocks (2) gewickelt ist, die ebenfalls die Form einer Rotationsfläche hat; wobei das Stahlseil (7) zum Zeitpunkt des Aufwickelns auf die äußere Seitenfläche (6) unter mechanischer Spannung auf die äußere Seitenfläche (6) gelegt wurde, wodurch sich das Metallseil (7) in einem Spannungszustand befindet, d.h. statisch einer zuvor induzierten und blockierten Zugspannung ausgesetzt ist.

## Revendications

1. Méthode de fabrication de dispositifs hydrauliques monolithiques à tubes multiples (1), en particulier d'échangeurs de chaleur, comprenant les étapes consistant à :
i) - produire une pluralité de plaques (14, 15) métalliques canalisées délimitées par des faces planes (16) opposées et prévues, sur au moins une desdites faces planes, d'une ou plusieurs rainures ou d'un ou plusieurs canaux (18) qui s'étendent entre des premières extrémités (19) opposées des plaques et parallèlement à des deuxièmes extrémités (20, 21) opposées des plaques agencées transversalement aux premières extrémités, laissant les deuxièmes extrémités des plaques métalliques solides et sans rainures ou canaux ;
ii) - empiler les plaques (14, 15) métalliques canalisées avec les faces planes opposées reposant directement l'une contre l'autre pour former un empilement (22) ; et
iii) - soumettre l'empilement (22) de plaques métalliques canalisées à au moins un cycle d'intégration thermomécanique par collage par diffusion de manière à obtenir, à partir des plaques métalliques, un seul bloc monolithique (2) à l'intérieur duquel les rainures ou les canaux forment une pluralité de tuyaux (3) réalisant au moins un circuit hydraulique (4 ; 5) ; **caractérisée en ce que**
iv) - ladite pluralité de plaques (14, 15) métalliques canalisées ont la même forme mais sont réalisées deux par deux, une largeur mesurée entre lesdites deuxièmes extrémités (20, 21) de celles-ci diminuant progressivement à partir d'au moins une première plaque ou d'un premier couple (24) de plaques de largeur identique agencées dans un plan médian (α) de l'empilement, la pluralité de plaques métalliques canalisées étant agencées alternativement et symétriquement au-dessus et au-dessous de la première plaque ou du premier couple de plaques ; la largeur des plaques (14, 15) métalliques étant telle que le bloc monolithique (2) qui est obtenu à la fin de l'étape iii) de collage par diffusion a une forme qui est sensiblement un solide de révolution ;
v) - à la fin de l'étape iii) d'intégration des plaques (14, 15) métalliques par collage par diffusion, enrouler un câble (7) métallique sur le bloc monolithique (2) métallique avec une forme d'un solide de révolution obtenue à partir des plaques métalliques, le câble (7) métallique étant étroitement enroulé en spirale et/ou ayant un enroulement croisé sur une surface extérieure latérale (6) du bloc métallique monolithique et étant ensuite solidement fixé à ce dernier.

2. Méthode selon la revendication 1, **caractérisée en ce que** l'étape d'enroulement du câble (7) métallique sur la surface extérieure latérale (6) du bloc monolithique (2) métallique est réalisée en maintenant le câble (7) métallique sous tension mécanique.

3. Méthode selon la revendication 1 ou 2, **caractérisée en ce que** à l'étape v), un câble (7) métallique utilisé a une section transversale de forme circulaire, ovale ou elliptique, ou néanmoins une forme sans arêtes.

4. Méthode selon l'une des revendications précédentes, **caractérisée en ce que** lesdites rainures ou lesdits canaux (18) des plaques métalliques canalisées sont obtenus dans une partie intermédiaire (33) des plaques canalisées comprise entre lesdites premières extrémités (19) de celles-ci ; lesdites premières extrémités des plaques canalisées étant dotées intérieurement de premières ouvertures traversantes (34) percées perpendiculairement auxdites faces planes (16) opposées des plaques canalisées, lesdites rainures ou lesdits canaux (18) débouchant dans lesdites premières ouvertures traversantes.

5. Méthode selon la revendication 4, **caractérisée en ce que** lesdites plaques (14, 15) métalliques canalisées sont réalisées de manière à ce que leurs premières extrémités (19) soient d'une largeur, mesurée transversalement aux deuxièmes extrémités, plus importante que celle de ladite partie intermédiaire (33) des plaques canalisées ; lesdites premières extrémités (19) étant de préférence formées de manière à définir, après l'intégration des plaques, des extrémités terminales (12, 13) opposées respectives du bloc monolithique (2) métallique formées essentiellement comme un cône tronqué.

6. Méthode selon la revendication 4 ou 5, **caractérisée en ce que** lesdites premières extrémités (19) des plaques canalisées sont dotées intérieurement de deuxièmes ouvertures traversantes (36) réalisées perpendiculairement auxdites faces planes (16) opposées des plaques canalisées et agencées à côté des premières ouvertures traversantes (34), aucune desdites rainures ou aucun desdits canaux ne débouchant dans les deuxièmes ouvertures traversantes (36).

7. Méthode selon la revendication 6, **caractérisée en ce que** les plaques métalliques canalisées sont réalisées en un premier (14) et en un deuxième (15) type ayant les premières ouvertures traversantes (34) agencées de manière opposée, et sont couplées dans l'empilement (22) par paires formées par une plaque du premier type (14) et par une plaque du deuxième type (15) ; les plaques du premier type (14) ayant les premières ouvertures traversantes (34) agencées alignées avec les deuxièmes ouvertures traversantes (36) des plaques du deuxième type (15), de sorte que les rainures ou les canaux (18) des plaques forment, à l'intérieur du bloc métallique monolithique, des tuyaux (3) définissant un premier et un deuxième circuit hydraulique (4, 5) séparés l'un de l'autre, circuits dont les premières (34) et deuxièmes (36) ouvertures traversantes, alignées alternativement l'une avec l'autre, définissent des conduits d'accès (40) respectifs ; lesdites ouvertures traversantes (14, 15) étant de préférence également utilisées pour y insérer des broches d'alignement (41), afin d'assurer l'alignement des plaques au cours de l'étape d'empilage.

8. Méthode selon l'une des revendications précédentes, **caractérisée en ce que** les plaques (14, 15) canalisées, une fois empilées, sont maintenues assemblées au moyen de points de soudure périmétriques et/ou au moyen de broches d'alignement (41) insérées dans des trous ou dans des ouvertures traversantes (34, 36) obtenus à travers les plaques canalisées, de préférence aux premières extrémités (19) de celles-ci, et l'empilement (22) est inséré dans une capsule (43) qui est scellée et dans laquelle le vide est fait, de manière à créer le vide également dans une interface (45) entre les faces planes (16) opposées de chaque paire de plaques en contact mutuel ; ensuite, l'empilement (22) est soumis, à l'intérieur de la capsule, à un cycle HIP à basse pression, par exemple compris entre 100 et 300 bars, de manière à intégrer les plaques les unes aux autres pour former un assemblage (46) sensiblement monolithique et former lesdits tuyaux (3), la capsule est ouverte et l'assemblage (46) est soumis à un cycle HIP à haute pression au moyen d'un gaz chauffé à une température dépendant du matériau métallique avec lequel les plaques canalisées sont réalisées et compris entre 900 et 1 300 °C, alimenté sous pression à une pression de l'ordre de mille bars de manière à remplir l'ensemble desdits tuyaux (3), les plaques (14, 15) canalisées ayant été réalisées de manière à rendre, au cours de cette étape, les tuyaux (3) ouverts vers l'extérieur, jusqu'à l'obtention dudit bloc monolithique (2) métallique en forme de solide de révolution.

9. Méthode selon la revendication 8, **caractérisée en ce qu'**à la fin du cycle HIP à haute pression, des accessoires respectifs de connexion hydraulique aux tuyaux (3) sont soudés au bloc monolithique (2) métallique, puis le bloc métallique monolithique est soumis à l'étape d'enroulement avec un câble (7) métallique tendu, de préférence réalisé en acier.

10. Dispositif hydraulique monolithique à tubes multiples (1), en particulier un échangeur de chaleur, réalisé selon la méthode des revendications 1 à 9, **caractérisé en ce qu'**il consiste en :
- un bloc monolithique (2) métallique ayant la forme d'un solide de révolution et doté intérieurement d'une pluralité de tuyaux (3) configurés pour définir au moins un circuit hydraulique (4 ; 5) ; et
- un câble (7) en acier agencé enroulé de manière serrée sur une surface extérieure latérale (6) du bloc monolithique (2) métallique, ayant également la forme d'une surface de révolution ; le câble (7) en acier ayant été placé sur ladite surface extérieure latérale (6) sous tension mécanique au moment de l'enroulement sur la surface latérale (6), de sorte que le câble (7) métallique soit en état de tension, c'est-à-dire qu'il est soumis de manière statique à une contrainte de traction préalablement induite et ensuite bloquée.
